# EUROPÄISCHE PATENTSCHRIFT

(11) **EP 1 019 271 B1**
(45) Veröffentlichungstag und Bekanntmachung des Hinweises auf die Patenterteilung: **21.11.2001**
(21) Anmeldenummer: 98958797.7
(22) Anmeldetag: 30.09.1998
(51) Int. Cl.: B60R 21/32

(54) **VORRICHTUNG FÜR DEN INSASSENSCHUTZ IN EINEM KRAFTFAHRZEUG**
DEVICE FOR PROTECTING MOTOR VEHICLE OCCUPANTS
DISPOSITIF POUR LA PROTECTION DES OCCUPANTS DANS UN VEHICULE AUTOMOBILE

(30) Priorität: 02.10.1997 DE 19743738
(43) Veröffentlichungstag der Anmeldung: 19.07.2000
(73) Patentinhaber: SIEMENS AKTIENGESELLSCHAFT, 80333 München (DE)
(72) Erfinder: HERMANN, Stefan, D-93096 Köfering (DE)
(86) Internationale Anmeldenummer: DE9802909
(87) Internationale Veröffentlichungsnummer: WO9917965

(56) Entgegenhaltungen:
- EP-A- 0 305 654
- DE-A- 2 207 831
- DE-A- 3 736 294
- DE-A- 4 220 270

## Beschreibung

Die Erfindung betrifft eine Vorrichtung für den Insassenschutz in einem Kraftfahrzeug.

Die gattungsgemäße DE 37 29 019 A (bzw. EP 0 305 654 A) offenbart eine Vorrichtung für den Insassenschutz in einem Kraftfahrzeug mit Schall- oder Körperschallsensoren. Ein Auswerter unterscheidet anhand des aufgenommenen Schalls oder Körperschalls einen Aufprall von sonstigen Geräuschen und Störungen.

Bekannte Vorrichtungen für den Insassenschutz mit Körperschallsensoren nehmen durchwegs longitudinale Körperschall-Auslenkungen eines Karosseriebestandteiles des Kraftfahrzeugs auf. Ist beispielsweise das Karosseriebestandteil als ein zur Fahrzeuglängsachse parallel ausgerichteter, länglicher Metallträger ausgebildet, so wird dieser Längsträger bei einem Frontaufprall direkt durch das auf der Längsträger auftreffende Hindernis oder indirekt über andere Karosseriebestandteile in Longitudinalschwingung versetzt. Ein Körperschallsensor beispielsweise in Form eines auf den Längsträger aufgebrachten Dehnungsmeßstreifens nimmt longitudinale Schwingungen des Längsträgers auf. Diese Longitudinalschwingungen erfordern aufgrund ihrer geringen Amplituden einen hohen Verstärkungs- und Auswerteaufwand, um ausreichend Information aus dem aufgenommenen Körperschall erhalten zu können, und treten überdies nur in Stoßrichtung auf.

Aufgabe der Erfindung ist es, die Nachteile der bekannten Vorrichtung zu vermeiden und insbesondere eine Vorrichtung für den Insassenschutz in einem Kraftfahrzeug mit einem Körperschall-Sensor zu schaffen, die aufwandsarm herzustellen ist und dennoch ein ausreichend empfindliches Signal zum Erkennen eines Aufpralls liefert.

Die Aufgabe wird erfindungsgemäß durch die Merkmale des Anspruchs 1 gelöst. Dabei ist der Sensor zur Aufnahme von Körperschall derart an einem bei einem Aufprall in Körperschallschwingungen versetztes Karosseriebestandteil befestigt oder zumindest mit dem Karosseriebestandteil schwingungsgekoppelt, daß er transversale Komponenten der Körperschallschwingungen und damit eine transversale Körperschallauslenkung des Karosseriebestandteils aufnimmt. Abhängig von dem derart aufgenommenen transversalen Körperschall - im folgenden Körperschall genannt - steuert ein Auswerter ein zugeordneten Insassenschutzmittel des Kraftfahrzeugs.

Der Vorteil der erfindungsgemäßen Vorrichtung liegt insbesondere darin, daß ein transversale Körperschallauslenkungen aufnehmender Sensor ein Nutzschwingungen ausreichend empfindlich darstellendes und gegen Störeinflüsse ausreichend unempfindliches elektrisches Signal liefert, so daß ein Aufprall auf das Fahrzeug durch den gemessenen Körperschall zweifelsfrei erkannt werden kann. Ein transversaler Körperschall wird dabei aufgenommen unabhängig von der Richtung, aus der der Aufprall erfolgt.

Im folgenden sei im Zusammenhang mit der Auswertung des von dem Körperschallsensor gelieferten elektrischen Signals einfach von der Auswertung des Körperschalls die Rede.

Die Ansprüche 2 und 3 sind auf eine Anordnung des Körperschallsensors in einem Steuergerät für den Insassenschutz in einem Kraftfahrzeug gerichtet. Ein solches Steuergerät ist herkömmlicherweise fest mit einem Karosseriebestandteil verbunden, z. B. verschraubt. Die bestehende Anordnung eines solchen Steuergeräts kann durch geeignete Anordnung des Körperschallsensors im Steuergerät in vorteilhafter Weise zur Aufnahme transversaler Körperschall-Auslenkungen ausgenutzt werden, ohne daß der Körperschallsensor abseits des Steuergeräts angeordnet und über störanfällige und montageunfreundliche Leitungen mit dem Steuergerät und dem darin befindlichen Auswerter elektrisch verbunden werden muß. Vorzugsweise ist das Steuergerät dabei etwa mittig im Fahrzeug am Fahrzeugtunnel angeordnet, wobei der Fahrzeugtunnel selbst als starres Karosseriebestandteil ausgebildet ist oder mit einem solchen Karosseriebestandteil, z.B. einem Längsträger verbunden ist.

Anspruch 4 ist auf eine vorteilhafte Ausgestaltung des Körperschallsensors ausgerichtet. Die Ansprüche 5-7 kennzeichnen die Auswertung von vorteilhaften Parametern im aufgenommenen Körperschall. Eine Auslösung des Insassenschutzmittels wird vorzugsweise in Abhängigkeit der Auswertung dieser Parameter eingeleitet, wobei neben der Auswertung des Körperschalls auch noch andere sensierte Größen, wie z. B. eine Insassenerkennung oder eine Insassenpositionserkennung für eine letztendliche Auslöseentscheidung in vorteilhafter Weise berücksichtigt werden können.

Anspruch 8 ist auf eine vorteilhafte Weiterbildung der Vorrichtung ausgerichtet, bei der das Insassenschutzmittel in Abhängigkeit von dem aufgenommenen Körperschall wie auch in Abhängigkeit von einer durch einen Beschleunigungssensor aufgenommenen Beschleunigung ausgelöst wird. Eine derartige Vorrichtung hat den Vorteil, daß ein Aufprall von zwei auf unterschiedlichen physikalischen Prinzipien beruhenden Sensoren erkannt werden muß, um das zugehörige Insassenschutzmittel auszulösen. Dadurch wird eine Auslösung aufgrund eines defekten Sensors, aufgrund von Störsignalen oder aufgrund von Vibrationssignalen, beispielsweise hervorgerufen durch das Überfahren einer Schotterpiste, vermieden und die Auslösesicherheit der gesamten Vorrichtung wesentlich erhöht.

Die Erfindung und ihre Weiterbildungen werden anhand von Ausführungsbeispielen in den Zeichnungen näher erläutert. Es zeigen:
- Figur 1:: einen Längsschnitt durch ein Karosseriebestandteil, auf dem ein Steuergerät befestigt ist,
- Figur 2:: eine Körperschallwelle entlang des Karosseriebestandteils aus Figur 1,
- Figur 3:: ein erstes Blockschaltbild einer erfindungsgemäßen Vorrichtung und
- Figur 4:: ein weiteres Blockschaltbild einer erfindungsgemäßen Vorrichtung.

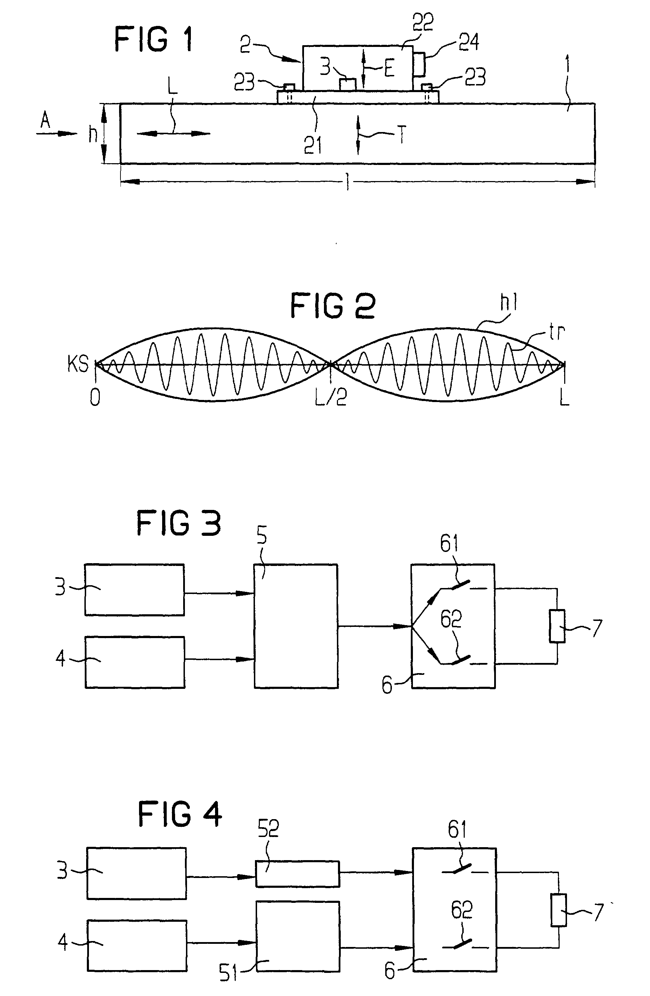

Figur 1 zeigt im Längsschnitt einen Kraftfahrzeuglängsträger als Karosseriebestandteil 1 mit der Länge 1, der Höhe h und einer nicht sichtbaren und nicht eingezeichneten Breite. Auf den Karosseriebestandteil 1 ist ein ebenfalls im Längsschnitt eingezeichnetes Steuergerät 2 angeordnet. Das Steuergerät 2 ist in Figur 1 in einem wesentlich größeren Maßstab eingezeichnet als das Karosseriebestandteil 1, um steuergerätspezifische Details deutlich darstellen zu können. Das Steuergerät 2 weist eine Grundplatte 21 und ein an der Grundplatte 21 befestigtes Gehäuse 22 auf. Die Grundplatte 21 ist über Schrauben 23 fest mit dem Karosseriebestandteil 1 verbunden, so daß insbesondere Körperschallschwingungen des Karosseriebestandteils 1 auf das Steuergerät 2 und insbesondere dessen Grundplatte 21 und Gehäuse 22 gut übertragen werden. Auf der Grundplatte 2 ist ein Körperschallsensor 3 angeordnet. Am Gehäuse 22 ist ferner ein Steckverbinder 24 angeordnet.

Bei einem Aufprall A aus der eingezeichneten Richtung gibt das Karosseriebestandteil 1 aufgrund seines direkten oder indirekten Kontaktes mit dem Aufprallhindernis Körperschall ab. Zur Körperschallermittlung können dabei in an sich bekannter Weise Longitudinalwellen L mit durch den Pfeil in Figur 1 ist deren Auslenkungsrichtung durch einen geeigneten Körperschallsensor aufgenommen werden. Erfindungsgemäß werden jedoch Transversal-Körperschallwellen T mit durch den entsprechenden Pfeil in Figur 1 eingezeichneter Auslenkrichtung durch einen geeigneten Körperschallsensor aufgenommen. Die Transversal-Körperschallwellen T sind dabei quer zu den Longitudinalwellen L ausgerichtet. Die Transversalschwingungen des Körperschalls werden infolge der starren Befestigung des Steuergeräts 2 an den Karosseriebestandteil 1 von diesem auf den Körperschallsensor 3 übertragen. Die mit einem Pfeil in Figur 1 eingezeichnete Empfindlichkeitsachse E des Körperschallsensors 3, der vorzugsweise als piezoelektrischer Sensor ausgebildet ist, ist zur Aufnahme der transversalen Körperschallauslenkung ausgerichtet.

Der Körperschallsensor 3 mißt dabei die Auslenkung des Karosseriebestandteils 1 in transversaler Richtung, wobei eine Messung der Auslenkung gleichzusetzen und gleichsam unter Schutz gestellt ist einer Messung der Geschwindigkeit oder der Beschleunigung des Karosseriebestandteils in transversaler Richtung.

Figur 2 zeigt eine in Folge des Aufpralls A auftretende stehende Körperschallwelle KS mit Auslenkung in transversaler Richtung entlang der Länge 1 des Karosseriebestandteils 1 nach Figur 1. Dabei weist die Körperschallwelle KS beispielhaft Schwingungsknoten am Anfang 0 und Ende 1 sowie in der Mittel 1/2 des Karosseriebetsndteils 1 auf, Schwingungsbäuche dagegen bei 1/4 und 3 1/4. Der Körperschallsensor 3 sollte entlang des Karosseriebestandteils 1 nicht in einem Punkt angeordnet werden, in dem zumindest mit großer Wahrscheinlichkeit ein Schwingungsknoten in der Körperschallwelle KS bei einem Aufprall erwartet wird, sondern in einem Bereich eines zu erwartenden Schwingungsbauches. Ist der Körperschallsensor 3 beispielsweise als piezoelektrischer Sensor ausgebildet und in seinem Normalbetrieb mit einer Trägerschwingung tr angeregt, so wird in Folge des Aufpralls diese Trägerschwingung gemäß Figur 2 amplitudenmoduliert. Maßgeblich für den durch den Körperschallsensor 3 aufgenommenen Körperschall ist dann die Hüllkurve hl der amplitudenmodulierten Trägerschwingung tr. Die Trägerschwingung tr wird durch ein Tiefpaßfilter entfernt.

Ist das Karosseriebestandteil 1 nach Figur 1 ein Längsträger des Kraftfahrzeugs, also parallel zur Fahrzeuglängsachse angeordnet, so ist die Empfindlichkeitsausrichtung des Körperschallsensors 3 auch prädestiniert zur Aufnahme von Transversalwellen nicht nur bei einem Aufprall A von vorne sondern auch bei einem nicht eingezeichneten Aufprall von der Fahrzeugseite, da auch für diese Aufprallrichtung der Körperschallsensor 3 die transversale Komponente von Körperschallschwingungen des Karosseriebestandteils 1 aufnimmt.

Sollen Insassenschutzmittel des Kraftfahrzeugs alleine in Abhängigkeit der Körperschallerkennung im Kraftfahrzeug ausgelöst werden, so sind vorzugsweise zumindest zwei Körperschallsensoren im Kraftfahrzeug anzuordnen und mit dem Auswerter elektrisch zu verbinden. Die Körperschallsensoren sind dabei räumlich derart anzuordnen, daß aus den beiden Körperschallsignalen die Aufprallrichtung bei einem Aufprall erkannt werden kann, insbesondere durch einen zeitlichen Vergleich der beiden Körperschallsignale. Aus diesem Laufzeitvergleich kann insbesondere die Geschwindigkeit der eindringenden Struktur und ihre Eindringrichtung erkannt werden. Abhängig von der ermittelten Richtung werden ein oder mehrere Insassenschutzmittel wie z, B. Front- oder Seitenairbags oder Gurtstraffer ausgewählt. Abhängig von der aus den beiden Körperschallsignalen abgeleiteten Geschwindigkeit der eindringenden Struktur wird das ausgewählte Insassenschutzmittel ausgelöst.

In den Figuren 3 und 4 sind zwei Blockschaltbilder von erfindungsgemäßen Vorrichtungen gezeigt. Beide Vorrichtungen sehen jeweils einen Körperschallsensor 3 und einen Beschleunigungssensor 4 vor. Dabei ist der Beschleunigungssensor 4 beispielsweise derart ausgerichtet, daß er einen Frontaufprall erkennt. In Figur 3 wertet der Auswerter 5 die Signale des Körperschallsensors 3 und des Beschleunigungssensors 4 aus und steuert in Abhängigkeit davon steuerbare Leistungsstufen 61 und 62 einer integrierten Zündschaltung 6 an, wobei durch ein Leitendsteuern der beiden steuerbaren Leistungsstufen 61 und 62 ein Zündelement 7 eines Insassneschutzmittels mit Energie beaufschlagt wird. Der Auswerter 5 ist gewöhnlich als Mikroprozessor ausgebildet, kann aber auch als sonstige logische oder analoge Schaltung ausgebildet sein.

Das Blockschaltbild nach Figur 4 unterscheidet sich in dem Blockschaltbild nach Figur 3 darin, daß jedem Sensor 3 und 4 ein eigener Auswerter 51 bzw. 52 zugeordnet ist, welcher seinerseits jeweils eine steuerbare Leistungsstufe 62 bzw. 61 steuert. In ihrer Hardware können die beiden Auswerter 51 und 52 getrennt voneinander implementiert sein oder auch gemeinsam als Mikroprozessor ausgebildet sein. Mit dem Blockschaltbild nach Figur 4 soll lediglich zum Ausdruck gebracht werden, daß jede steuerbare Leistungsstufe 61 und 62 nur in Abhängigkeit entweder des Körperschalls oder der Beschleunigung leitend geschalten werden kann. Eine solche Vorrichtung hat den Vorteil, daß beispielsweise bei Ausfall eines der beiden Sensoren 3 oder 4 eine Fehlauslösung des zugeordneten Zündelements 7 verhindert werden kann, da der andere funktionstüchtige Sensor 4 bzw 3 weiterhin keinen Aufprall anzeigt und damit die diesem Sensor 4 bzw 3 zugeordnete Leistungsstufe 62 bzw 61 in nicht leitendem Zustand verbleibt.

Vorzugsweise wird gemäß Figur 4 eine der steuerbaren Leistungsstufen 61 oder 62 zu einem Zeitpunkt vom zugehörigen Auswerter 52 bzw. 51 bzw. dem zugehörigen Sensor 3 bzw. 4 zu einem frühen Zeitpunkt leitend geschaltet, zu dem ein Aufprall mit einer Mindeststärke erkannt wird. Diese Mindeststärke ist jedoch nicht die Aufprallstärke, ab der ein Schutz des Insassen durch ein Insassenschutzmittel erforderlich ist. Dieser Mindeststärkenvergleich soll lediglich gewährleisten, daß ein Aufprall irgendeiner Art erkannt wird. Der zu diesem Zweck verwendete Sensor ist in der Fachwelt mit dem Begriff Safing-Sensor belegt. Ein Safing-Sensor bereitet ein Auslösen des Insassenschutzmittels vor, sofern ein Mindestaufprall erkannt wird, verhindert andererseits ein Auslösen des Insassenschutzmittels zu verhindern, wenn er keinen Mindestaufprall erkennt, jedoch der weitere Sensor z.B. defekt ist und ein Auslösen erwünscht. Der weitere Sensor bzw. der zugeordnete Auswerter schaltet im Normalbetrieb die zugeordnete steuerbare Leistungsstufe erst zu einen Zeitpunkt leitend, zu dem ein Auslösen des Schutzmittels als unbedingt erforderlich erachtet wird.

In vorteilhafter Weise kann nun der Beschleunigungssensor 4 die Aufgabe eines Safing-Sensors übernehmen. Dazu liefert der elektronische Beschleungigungssensor ein analoges Ausgangssignal, das gefiltert, verstärkt, ggf. analog-digital-gewandelt und vorzugsweise integriert wird. Nach seiner Integration wird das Signal mit einem relativ niedrig angesetzten Schwellwert verglichen. Wird dieser Schwellwert überschritten, ist ein Aufprall mit einer Mindestaufprallstärke erkannt, so daß gemäß Figur 4 der Auswerter 51 die steuerbare Leistungsstufe 62 leitend schaltet. Damit ist gewährleistet, daß zumindest ein leichter Aufprall aus einer bestimmten Richtung - eben die Richtung für die der Beschleunigungssensor 4 empfindlich ist - vorliegt. Die Auswertung des von dem Körperschallsensor 3 gelieferten Signals durch den Auswerter 52 bringt nun Klarheit darüber, ob der Aufprall stark genug ist, um das zugeordnete Insassenschutzmittel auszulösen. Dabei wird insbesondere der Pegel/die Amplitude des Körperschallsignals oder seiner Hüllkurve mit einem Grenzwert verglichen. Bei Überschreiten des relativ hoch angesetzten Grenzwerts wird durch den Auswerter 52 die steuerbare Leistungsstufe 61 leitend geschaltet, so daß das Insassenschutzmittel ausgelöst wird. Vorzugsweise wird jedoch nicht oder nicht alleine ein solch einfacher Grenzwertvergleich zum Steuern der zugeordneten Leistungsstufe verwendet. Vorzugsweise wird die Frequenz des Körperschallsignals und insbesondere seine Frequenzänderung über der Zeit ermittelt: Verkürzt sich die Länge 1 des Karosseriebestandteils 1 nach Figur 1 in Folge eines eindringenden Hindernisses, so ändert sich die Frequenz der stehenden Welle nach Figur 2: Sie erhöht sich. Eine derart ermittelte Frequenzänderung ist ein Maß für die Geschwindigkeit des eindringenden Hindernisses und damit für die mit dem Aufprall übertragene Energie. Eine derart ermittelte Frequenzänderung ist.prädestiniert zum Leitendschalten der steuerbaren Leistungsstufe 61.

Anstelle eines analogen Beschleunigungssensors mit nachfolgendem Auswerter 51 und steuerbarer Leistungsstufe 62 kann auch ein mechanischer Beschleunigungsschalter verwendet werden, der bei Überschreiten eines Mindestschwellwerts ein Schaltsignal liefert. Dabei kann der Zündstromkreis direkt über den mechanischen Beschleunigungsschalter geführt werden.

Alternativ kann in einer vorteilhaften Weiterbildung der Körperschallsensor 3 als Safing-Sensor verwendet werden. Dabei genügt ein einfacher Schwellwertvergleich des Körperschallpegels mit einer relativ niedrig angesetzten Schwelle zum Leitendschalten der steuerbaren Leistungsstufe 61. Das von dem Beschleunigungssensor 4 gelieferte analoge Signal wird im Auswerter 51 verstärkt, ggf. analog-digital-gewandelt und daraufhin einem mitunter komplexen Auslösealgorithmus unterworfen. Wird ein schwerer Aufprall erkannt, wird nun auch die steuerbare Leistungstufe 62 leitend schaltet, so daß das Insassenschutzmittel ausgelöst wird.

In einer weiteren vorteilhaften Weiterbildung kann ein Erkennen eines Aufpralls anhand des Körperschalls eine Auswertung des Beschleunigungssignals angestoßen werden. Dabei wird gegenüber herkömmlichen Vorrichtungen ein Zeitvorteil erzielt, da der Körperschall bereits etliche Zeit vor der Beschleunigung erkannt wird. Für eine geringe Auslösezeit wertvolle Millisekunden - insbesondere für die Auslösung von Seitenairbags - können dabei zugunsten der Auswertung des Beschleunigungssignals gewonnen werden.

Auch wenn die Zündentscheidung allein durch ein oder mehrere Körperschallsensoren erfolgt, ist ein Zeitvorteil gegenüber einer herkömmlichen Beschleunigungserkennung gegeben, da die Spektralanteile des Körperschalls oberhalb von 10 kHz, die Spektralanteile der Beschleunigung jedoch unterhalb von 400 Hz liegen und damit bei Verwendung von Körperschallsensoren eine schnellere Entscheidung getroffen werden kann.

## Patentansprüche

1. Vorrichtung für den Insassenschutz in einem Kraftfahrzeug mit einem Sensor (3) zur Aufnahme einer Körperschall-Auslenkung (KS) eines Karosseriebestandteils (1) des Kraftfahrzeugs, und mit einem Auswerter (5), der abhängig von dem aufgenommenen Körperschall (KS) ein Insassenschutzmittel des Kraftfahrzeugs steuert, **dadurch gekennzeichnet, daß** der Sensor (3) eine transversale Körperschall-Auslenkung (KS) des Karosseriebestandteils des Kraftfahrzeugs aufnimmt.

2. Vorrichtung nach Anspruch 1, bei der der Sensor (3) in oder an einem Steuergerät (2) für den Insassenschutz angeordnet ist, das seinerseits an dem Karosseriebestandteil (1) befestigt ist.

3. Vorrichtung nach Anspruch 1 oder Anspruch 2, bei der der Karosseriebestandteil (1) ein mittig im Fahrzeug angeordneter Träger ist.

4. Vorrichtung nach einem der vorhergehenden Ansprüche, bei der der Sensor (3) als piezoelektrischer Sensor ausgebildet ist.

5. Vorrichtung nach einem der vorhergehenden Ansprüche, bei der die Amplitude des Körperschalls (KS) ausgewertet wird.

6. Vorrichtung nach einem der vorhergehenden Ansprüche, bei der die Frequenz des Körperschalls (KS) ausgewertet wird.

7. Vorrichtung nach einem der vorhergehenden Ansprüche, bei der die zeitliche Frequenzänderung des Körperschalls (KS) ausgewertet wird.

8. Vorrichtung nach einem der vorhergehenden Ansprüche, die einen Beschleunigungssensor (4) aufweist, und bei der abhängig von der aufgenommenen Beschleunigung und abhängig von dem aufgenommenen Körperschall (KS) das Insassenschutzmittel gesteuert wird.

## Claims

1. Device for occupant protection in a vehicle with a sensor (3) to sense a structure-borne sound deflection (KS) of a body member (1) of the vehicle, and with an evaluator (5) that controls an occupant protection device of the vehicle relative to the sensed structure-borne sound (KS), **characterised in that** the sensor (3) senses a transverse structure-borne sound deflection (KS) of the body member of the vehicle.

2. Device in accordance with claim 1, whereby the sensor (3) is arranged in or at a control unit (2) for occupant protection, which in turn is secured to the body member (1).

3. Device in accordance with claim 1 or claim 2 whereby the body member (1) is a member arranged centrally in the vehicle.

4. Device in accordance with one of the preceding claims, whereby the sensor (3) is designed as piezoelectric sensor.

5. Device in accordance with one of the preceding claims, whereby the amplitude of the structure-borne sound (KS) is evaluated.

6. Device in accordance with one of the preceding claims, whereby the frequency of the structure-borne sound (KS) is evaluated.

7. Device in accordance with one of the preceding claims, whereby the change in the frequency of the structure-borne sound (KS) relative to time is evaluated.

8. Device in accordance with one of the preceding claims, which has an acceleration sensor (4) and whereby the occupant protection device is controlled relative to the sensed acceleration and relative to the sensed structure-borne sound (KS).

## Revendications

1. Dispositif pour la protection des occupants dans un véhicule automobile, comprenant un capteur (3) destiné à capter une excursion (KS) d'un son dans les solides d'un élément de carrosserie (1) d'un véhicule automobile, et un analyseur (5) qui commande un moyen de protection des occupants du véhicule automobile en fonction du son dans les solides capté (KS), **caractérisé en ce que** le capteur (3) capte une excursion transversale (KS) du son dans les solides de l'élément de carrosserie du véhicule automobile.

2. Dispositif selon la revendication 1, dans lequel le capteur (3) est disposé dans ou sur un appareil de commande (2) pour la protection des occupants qui, de son côté, est fixé à l'élément de carrosserie (1).

3. Dispositif selon la revendication 1 ou la revendication 2, dans lequel l'élément de carrosserie (1) est une poutre disposée en position centrale dans le véhicule.

4. Dispositif selon l'une des revendications précédentes, dans lequel le capteur (3) est constitué par un capteur piézo-électrique.

5. Dispositif selon l'une des revendications précédentes, dans lequel on analyse l'amplitude du son dans les solides (KS).

6. Dispositif selon l'une des revendications précédentes, dans lequel on analyse la fréquence du son dans les solides (KS).

7. Dispositif selon l'une des revendications précédentes, dans lequel on analyse la variation dans le temps de la fréquence du son dans les solides (KS).

8. Dispositif selon l'une des revendications précédentes, qui présente un capteur d'accélération (4) et dans lequel le moyen de protection des occupants est commandé en fonction de l'accélération captée et en fonction du son dans les solides (KS) capté.
